Europäisches Patentamt

(19) European Patent Office

Office européen des brevets

(11) Veröffentlichungsnummer: **0 084 554**
**B1**

(12) **EUROPÄISCHE PATENTSCHRIFT**

(51) Int. Cl.⁴: **B 01 D 11/02,** A 23 F 5/26,
**B 01 D 29/00**

(45) Veröffentlichungstag der Patentschrift:
**11.06.86**

(21) Anmeldenummer: **82902442.1**

(22) Anmeldetag: **02.08.82**

(86) Internationale Anmeldenummer:
**PCT/EP 82/00160**

(87) Internationale Veröffentlichungsnummer:
**WO 83/00442 (17.02.83 Gazette 83/5)**

(54) **EXTRAKTIONSVERFAHREN.**

(30) Priorität: **31.07.81 DE 3130360**

(43) Veröffentlichungstag der Anmeldung:
**03.08.83 Patentblatt 83/31**

(45) Bekanntmachung des Hinweises auf die Patenterteilung:
**11.06.86 Patentblatt 86/24**

(84) Benannte Vertragsstaaten:
**AT BE CH DE FR GB LI LU NL SE**

(56) Entgegenhaltungen:
**DE - A - 2 611 456**
**FR - A - 1 153 176**
**FR - A - 1 189 554**

(73) Patentinhaber: **MITTEX AKTIENGESELLSCHAFT,**
**Aeulestrasse 5, FL-9490 Vaduz (LI)**

(72) Erfinder: **HUSSMANN, Peter, Via del Pucci 4,**
**I-50100 Florenz (IT)**

(74) Vertreter: **Haug, Dietmar et al, Patentanwälte Andrae,**
**Flach, Haug Steinstrasse 44, D-8000 München 80 (DE)**

LIBER, STOCKHOLM 1986

## Beschreibung

Die Erfindung betrifft ein Verfahren zur Extraktion der extrahierbaren Stoffe aus natürlichen Ausgangsstoffen, bei welchem in aufeinanderfolgenden Verfahrenszyklen jeweils eine frische Menge des zuvor gemahlenen Ausgangsstoffes auf ein Filtermedium aufgebracht wird und unterschiedlich konzentrierte Extraktlösungen in der Reihenfolge abnehmender Konzentration bei einer vorbestimmten Verfahrenstemperatur mit dem Ausgangsstoff jeweils vermischt und von ihm wieder abgetrennt werden, wobei die jeweilige Extraktlösung höchster Konzentration nach ihrer weiteren Anreicherung der Dehydratation zugeführt wird.

Ein solches Extraktionsverfahren ist in der US-A-1 687 112 beschrieben. Bei dem dort beschriebenen Verfahren werden die Extraktivstoffe ebenfalls mit Extraktlösungen abnehmender Konzentration nach dem Gegenstromprinzip extrahiert. Die Verfahrenstemperatur ist während der gesamten Verfahrensdauer sehr niedrig und wird vorzugsweise unter 15° C angesetzt. Das Extraktionsgut wird zwar zuvor gemahlen, jedoch ist der Mahlgrad nicht besonders fein, denn die Teilchen haben eine Korngröße von 850μm (20 mesh). Ein Extraktionsverfahren ist in unserer EP-A-82900104.9 (Priorität: 22.12.80 und 31.07.81; Anmeldetag: 18.12.81; Veröffentlichungestag: 08.07.82) beschrieben. Bei diesem Verfahren werden die Extraktlösungen in jedem Zyklus nacheinander dem Ausgangsstoff zugemischt und von ihm wieder abgetrennt, wobei die Konzentration jeder Extraktlösung auf einen Wert angehoben wird, der den Konzentrationswert der jeweils vorausgegangenen Extraktlösung, die dem Ausgangsstoff zugemischt worden ist, entspricht, so daß das Konzentrationsgefälle der Extraktlösungen bei aufeinanderfolgenden Zyklen stetig bleibt. Bei dem vorbekannten Verfahren wird die Extraktion mit Extraktlösungen relativ hoher Konzentration bei Raumtemperatur durchgeführt, während die Verfahrenstemperatur bei der Extraktion mit Extraktlösungen relativ niedriger Konzentration auf 95° C bis 100° C gesteigert wird.

Aus unserer EP-A-82900945.5 (Priorität: 16.03.81; Anmeldetag: 11.03.82; Veröffentlichungstag 30.01.82): ist noch ein ähnliches Extraktionsverfahren zur Herstellung von Instant-Kaffee bekannt. Bei diesem Verfahren ist vorgesehen, den Ausgangsstoff in einem einzigen Naßmahlvorgang sehr stark zu zerkleinern und die Verfahrenstemperatur der Extraktion mit Extraktlösungen geringer Konzentration erheblich zu steigern.

Ferner ist aus der FR-A-1 189 554 ein Pektingewinnungsverfahren bekannt, bei dem nach Ausfällung der Pektine ein Auswaschvorgang mit Pektinlösungen abnehmender Konzentration durchgeführt wird. Die Auswaschung erfolgt unter Rühren und bei geringen Temperaturen.

Die Aufgabe der Erfindung besteht darin, das gattungsgemäße Verfahren so fortzubilden, daß bei einer noch schonenderen Extraktion eine höhere Ausbeute erzielt wird.

Die Aufgabe der Erfindung wird dadurch gelöst, daß in jedem Verfahrenszyklus der Ausgangsstoff durch nochmaliges Mahlen oder intensives Rühren weiter zerkleinert wird und die Verfahrenstemperatur im Bereich zwischen 25° C und 50° C konstant gehalten wird.

Das nochmaße Mahlen oder intensive Rühren versucht ein intensives Durcheinanderwirbeln der Mischung. Dieses Durcheinanderwirbeln, bewirkt, daß die Konzentration der von dieser Mischung getrennten Extraktlösungsmenge höher ist, als wenn die Mischung nicht intensiv durcheinandergewirbelt worden wäre, so daß das Konzentrationsgefälle der Extraktlösungsmengen nicht mehr stetig verläuft, sondern einen Sprung macht. Da sich die durch diese Maßnahme bewirkte Konzentrationserhöhung nach einer gewissen Anlaufphase des Verfahrens auch auf die jeweils zum ersten Mal in jedem Zyklus abgetrennt Extraktlösungsmenge, die zur Weiterbearbeitung abgefürt wird, ausgewirkt hat, ergibt sich insgesamt eine höhere Ausbeute. Bei der Extraktion aromareicher Stoffe nach dem erfindungsgemäßen Verfahren bleibt das Aroma nahezu vollständig erhalten, was darauf zurückzuführen ist, daß das Verfahren vollständig bei Raumtemperatur durchgeführt wird und die jeweilige Extraktlösungsmenge höchster Konzentration nicht mehr zur Vermahlung des Extraktionsgutes mitverwendet wird. Durch die Vermeidung einer Naßvermahlung des Extraktionsgutes unter Verwendung der jeweiligen Extraktlösungsmenge höchster Konzentration ergibt sich insgesamt eine Beschleunigung des Verfahrens, was sich ebenfalls aromaschonend auf das Verfahren auswirkt.

Das erfindungsgemäße Verfahren hat gegenüber den bereits vorgeschlagenen Verfahren den weiteren Vorteil, daß wesentlich weniger Energie für die Extraktion aufgewendet werden muß, als bei den vorgeschlagenen Verfahren, da eine Temperatursteigerung über die Raumtemperatur hinaus nicht mehr stattfindet. Die Durchführung des Verfahrens bei Raumtemperatur wirkt sich auch positiv auf die Investitionskosten für die Vorrichtung zur Durchführung des Verfahrens aus, da nunmehr auf eine Heizvorrichtung zur Anhebung der Verfahrenstemperatur verzichtet werden kann.

Das Durcheinanderwirbeln der Mischung muß so heftig sein, daß dabei das Extraktionsgut weiter zerkleinert wird, zumindest jedoch so, daß die festen Teilchen der Extraktionsmasse intensiv in Kontakt mit der Extraktlösung gebracht werden. Zur Erzielung dieses Ergebnisses ist es unerläßlich, wenn die oder jede das Extraktionsgut und eine Extraktlösungsmenge enthaltende Mischung eines Zykluses dadurch intensiv durcheinandergewirbelt wird, daß sie in eine Mahlvorrichtung gegeben und nochmals gemahlen wird. Wie bei den bereits vorgeschlagenen Verfahren eignet sich hier als Mahlvorrichtung wieder eine Kugelmühle, in der dann der Mahlvorgang jeweils 6 bis 24 Stunden, vorzugsweise jedoch 12 Stunden, dauern sollte.

Anstelle mit einer Mahlung kann das intensive Durcheinanderwirbeln auch dadurch erfolgen, daß die oder jede Mischung heftig gerührt wird. Hierzu sollte dann vorzugsweise ein hochtouriger Intensivrührer verwendet werden. Unter verfahrenstechnischen Gesichtspunkten ist es von Vorteil, wenn das heftige Rühren der Mischung direkt im Extraktor erfolgt, so daß die Mischung aus dem Extraktor für den Schritt des intensiven Durcheinanderwirbelns nicht abgesaugt und anschließend wieder zurückgepumpt werden muß.

Zur beschleunigten Durchführung des Verfahrens ist es zweckmäßig, wenn in jedem Zyklus der Schritt des intensiven Durcheinanderwirbelns einer Mischung nur einmal stattfindet. Eine nochmalige aber geringe Ausbeutesteigerung, verbunden jedoch mit einer etwas längeren Verfahrensdauer kann dadurch erzielt werden, daß in jedem Zyklus mehrere jeweils eine Extraktlösungsmenge und das Extraktionsgut enthaltende Mischungen intensiv durcheinandergewirbelt werden.

Zur Schonung des Aromas bei der Extraktion nach dem erfindungsgemäßen Verfahren ist von Bedeutung, daß der Schritt des intensiven Durcheinanderwirbelns der oder jeder Mischung in einem Zyklus erst dann stattfindet, wenn die Konzentration der dem Extraktionsgut zugeführten Extraktlösungsmengen relativ gering ist. Bei der Extraktion von Kaffee hat sich als zweckmäßig erwiesen, wenn der Schritt des intensiven Durcheinanderwirbelns erst dann stattfindet, wenn im jeweiligen Zyklus die Konzentration der zugeführten Extraktlösungsmenge auf einen Wert von 5 bis 1 Gew.% abgesunken ist. Es ist anzunehmen, daß auch bei der Extraktion anderer aromareicher Stoffe dieser Wert als Richtwert für den Zeitpunkt der Durchführung des erfindungsgemäßen Verfahrensschrittes des intensiven Durcheinanderwirbelns gilt.

Eine leichtere Trennung der jeweiligen Extraktlösung von der Extraktionsmasse und damit eine beschleunigte Durchführung des Verfahrens läßt sich dann erzielen, wenn bei jedem Zyklus am Anfang eine geringere Extraktlösungsmenge abgetrennt wird, als zuvor zugeführt worden ist, während bei den nachfolgenden Stufen jeweils genauso viel abgetrennt wird, wie zugeführt worden ist. Durch diese Maßnahme verbleibt in dem Extraktor immer eine größere Masse als die Summe aus dem Extraktionsgut und der jeweils zugeführten Extraktlösungsmenge ergeben würde. Bei den bereits vorgeschlagenen Verfahren hingegen, ist in jedem Zyklus in jeder Stufe die gleiche Extraktlösungsmenge wie die, die zugeführt worden ist, abgetrennt worden. Im Vergleich zu dem bereits vorgeschlagenen Verfahren ist also der Flüssigkeitsanteil der Extraktionsmasse in dem Extraktor während jeden Zykluses größer.

Im Sinne einer beschleunigten Durchführung des Verfahrens, und damit einer guten Aromaerhaltung, ist es von Vorteil, wenn ein Mischungsverhältnis zwischen dem Extraktionsgut und der jeweils zugeführten Extraktlösungsmenge im Bereich von 1 : 4 bis 1 : 10 (Gew/Gew), vorzugsweise jedoch 1 : 5 gewählt wird. Die Trennung im Extraktor läßt sich leichter und schneller durchführen und die Qualität des Extraktes ist besser, wenn das Extraktionsgut nicht zu fein gemahlen ist, d. h. eine Korngröße von unter 5 µm aufweist, sondern wenn das Extraktionsgut lediglich feinstgemahlen ist, so daß es eine Korngröße von 5 bis 50 µm aufweist und außerdem trocken gemahlen worden ist. Durch diese Wahl der Feinheit des Extraktionsgutes wird vermieden, daß in dem Extraktionsgut kolloidalfeine Partikel vorhanden sind, die mit der Extraktlösungsmenge abgetrennt und in den Extrakt gehen könnten. Auch eine Verstopfung des Trennmediums im Extraktor wird verhindert.

Wie bereits erwähnt, wird die Extraktion bei Raumtemperatur durchgeführt. Als Raumtemperatur soll beim erfindungsgemäßen Verfahren eine im Bereich zwischen 25° C und 50° C liegende Temperatur verstanden werden.

Obwohl das erfindungsgemäße Verfahren einen weiten Anwendungsbereich hat, kommen seine Vorzüge insbesondere dann zum Tragen, wenn es zur Extraktion der extrahierbaren Stoffe aus aromareichen Ausgangsmaterialien, wie Kaffee, Tee, Heilkräuter, Gewürze oder dgl., angewendet wird.

Eine Vorrichtung zur Durchführung des erfindungsgemäßen Verfahrens weist einen Flachbettfilterextraktor auf, der an eine Vielzahl von miteinander verschalteten Behältern, die zur Aufnahme der Extraktlösungsmengen unterschiedlicher Konzentration dienen, anschließbar ist, und ein geschlossenes, zylindrisches Gehäuse aufweist, in dem ein kreisförmiges Filterbett angeordnet ist, das aus einem Filtergewebe und einem Rost zum Stützen des Gewebes besteht, und der eine Einrichtung zum Druckreinigen des Filtergewebes aufweist. Diese Vorrichtung ist dadurch gekennzeichnet, daß die Reinigungseinrichtung mindestens eine unterhalb des Filtergewebes angeordnete Düse aufweist, die eine längliche, sich radial erstreckende, auf die Unterseite des Filtergewebes gerichtete Austrittsöffnung für das Druckreinigungsmedium aufweist und die um eine mit der Achse des Filtergewebes zusammenfallende Achse rotierbar ist, so daß die Austrittsöffnung bei der Rotation der Düse an der Unterseite des Filtergewebes zeigerförmig umläuft.

Diese Vorrichtung erlaubt eine sehr viel schnellere Extraktion als es mit den in den bereits erwähnten Patentanmeldungen vorgeschlagenen Vorrichtungen möglich war, so daß eine wesentlich bessere Aromaerhaltung erzielt werden kann, als mit den bereits vorgeschlagenen Vorrichtungen. Die schnellere Trennung im Extraktor führt auch zu einer höheren Ausbeute, denn die Gefahr, daß sich das Filtergewebe während der Extraktion zusetzt, so daß eine Verlangsamung der Trennung eintritt, ist nunmehr ausgeschaltet.

Eine vorteilhafte Weiterbildung der Extraktionsvorrichtung besteht darin, daß der Stützrost absenkbar ausgebildet ist, so daß für die Düse zur Rotation während der Reinigung des Filtergewebes Raum geschaffen ist. Wenn der Stützrost hochgefahren ist und das Gewebe wieder auf ihm aufliegt, befindet sich die Düse vorzugsweise in einer Vertiefung in dem Stützrost. Der Stützrost kann hydraulisch oder pneumatisch hochfahr- und absenkbar sein.

Eine besonders einfache konstruktive Lösung für die Düse besteht darin, wenn die Düse als geschlitztes Rohr ausgebildet ist, das parallel zum Filtergewebe angeordnet ist und sich in radialer Richtung vom Mittelpunkt des Filtergewebes bis zu seinem Rand hin erstreckt und das an seinem inneren Ende mit einem zum Gehäuse koaxialen, drehbaren Anschlußrohr verbunden ist, das durch den Stützrost hindurchgeht.

Im folgenden wird nun die Erfindung anhand der beiliegenden Zeichnung beispielsweise näher erläutert.

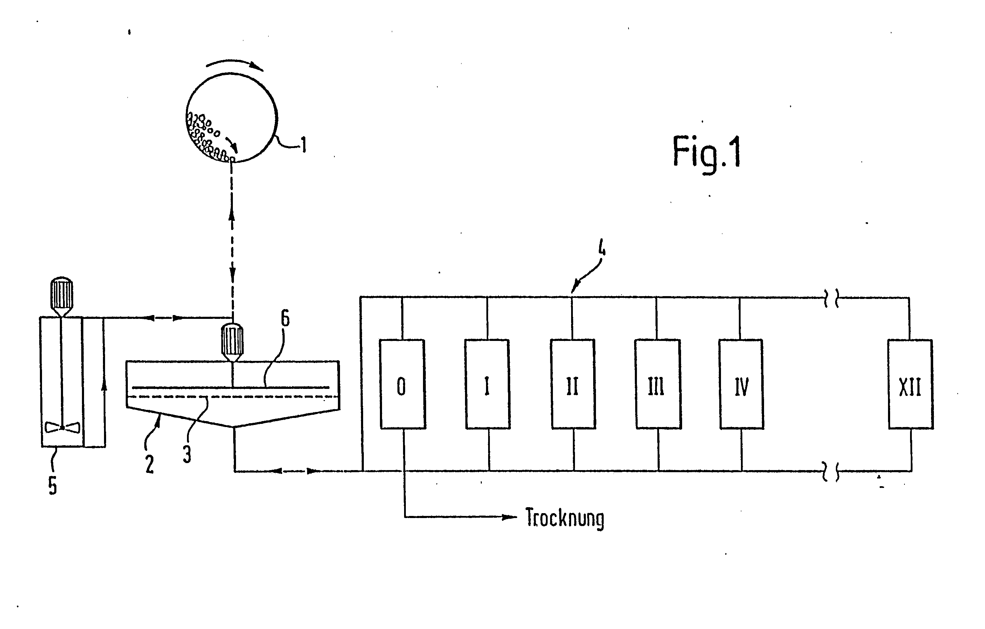

Fig. 1 zeigt das Verfahren nach der Erfindung in Form eines stark vereinfachten Fließbildes.

Als Extraktionsgut wird in einer Kugelmühle 1 im trockenen Zustand feinstgemahlener Kaffee mit einer Korngröße von 5 bis 50 µm verwendet. Der Kaffee wird in einem Flachbettfilterextraktor 2 auf ein Filtermedium 3 aufgebracht. Bevor der eigentliche Extraktionsprozeß beginnen kann, ist das gewünschte Konzentrationsgefälle der Extraktlösungsmengen in den Behältern I bis XII der Behälterbatterie 4 auszubilden. Zu Beginn dieses Vorschaltprozesses sind alle Behälter I bis XII mit noch reinem Lösungsmittel gefüllt. Es wird nun zunächst das Lösungsmittel aus dem Behälter 1 in den Flachbettfilterextraktor geführt und dort mit dem frisch aufgeschütteten Kaffee vermischt, wobei eine Lösung entsteht, die über das Filtermedium 3 abgetrennt und in den Behälter I zurückgeführt wird. Danach wird das Lösungsmittel aus dem Behälter II in den Flachbettfilterextraktor geführt und dort mit dem bereits leicht ausgelaugten Kaffee vermischt, wobei eine Lösung entsteht, die wieder über das Filtermedium 3 abgetrennt und in den Behälter II zurückgeführt wird. Die in dem Behälter II zurückgeführte Lösung hat eine geringere Konzentration als die Lösung, die zuvor in den Behälter I zurückgeführt worden ist. Dann wird das Lösungsmittel aus dem Behälter III in den Flachbettfilterextraktor geführt und dort mit dem nunmehr schon etwas stärker ausgelaugten Kaffee vermischt, wobei eine Lösung entsteht, die wiederum über das Filtermedium 3 in den Behälter III zurückgeführt wird. Die in den Behälter III zurückgeführte Lösung hat eine geringere Konzentration als die, die in den Behälter II zurückgeführt worden ist. In entsprechender Weise werden die Lösungsmittelmengen der weiteren Behälter IV bis XII nacheinander in den Flachbettfilterextraktor geführt, dort mit dem immer stärker ausgelaugten Kaffee vermischt, wobei sich jeweils eine Lösung ergibt, die in denselben Behälter zurückgeführt wird, aus dem die entsprechende Lösungsmittelmenge entnommen worden ist. Auf diese Weise entstehen mehrere voneinander getrennte Extraktlösungsmengen, deren Konzentration von Behälter zu Behälter abnimmt.

Zu Beginn des nächsten Zykluses wird der ausgelaugte Kaffee aus dem Flachbettfilterextraktor 2 entfernt und eine frische Charge feinstgemahlenen Kaffees eingebracht. Dann werden alle Lösungsmengen nacheinander jeweils in den Flachbettfilterextraktor 2 geführt, dort mit dem Kaffee vermischt und in denselben Behälter wieder zurückgeführt, aus dem sie jeweils abgeführt worden sind, wobei angefangen wird mit der Lösungsmenge höchster Konzentration im Behälter I und geendet wird mit der Lösungsmenge niedrigster Konzentration im Behälter XII. Auf diese Weise wird die Konzentration jeder Lösungsmenge schrittweise erhöht. Es folgen so viele weitere Zyklen, bis sich in den Behältern Lösungsmengen mit einer jeweils bestimmten Konzentration befinden, wobei zu Beginn jeden Zykluses der ausgelaugte Kaffee in dem Flachbettfilterextraktor durch eine frische Menge Kaffee ersetzt wird.

In einer weiteren Phase des Vorschaltprozesses werden in jedem Zyklus sämtliche in den Behältern I bis XII gespeicherten Extraktlösungsmengen nacheinander in den Flachbettfilterextraktor 2 geführt und dort mit dem Kaffee vermischt. Die jeweils über das Filtermedium 3 abgetrennte Lösungsmenge wird jedoch nicht wie in der ersten Phase des Vorschaltprozesses in denselben Behälter zurückgeführt, aus der die entsprechende Lösungsmenge entnommen worden ist, sondern wird dem jeweils "nächsthöheren" Behälter zugeführt. Beim vorliegenden Ausführungsbeispiel bedeutet dies, daß die Extraktlösungsmenge aus dem Behälter I nach der Vermischung im Flachbettfilterextraktor und Abtrennung über das Filtermedium 3 in den Behälter 0 geführt wird. Die Extraktlösungsmenge aus dem Extraktor II wird nach der Vermischung in dem Flachbettfilterextraktor 2 und der Trennung über das Filtermedium 3 dem Behälter I zugeführt. Die Extraktlösungsmenge aus dem Behälter III wird nach der Vermischung in dem Flachbettfilterextraktor 2 und der Trennung über das Filtermedium 3 in den Behälter II geführt. In entsprechender Weise wird mit den Extraktlösungsmengen der restlichen Behälter verfahren. Als zusätzliche Maßnahme wird in jedem Zyklus die in dem Flachbettfilterextraktor 2 entstandene Mischung aus dem teilweise ausgelaugten Kaffee und der Extraktlösungsmenge aus dem Behälter V aus dem Flachbettfilterextraktor 2 abgesaugt und in einen Intensivrührer 5 geführt, in dem ein intensives Durcheinanderwirbeln der Mischung vorgenommen wird. Danach wird die Mischung in den Flachbettfilterextraktor 2 wieder zurückgeführt, und es wird eine Extraktlösungsmenge über das Filtermedium 3 von ihr abgetrennt, die in den Behälter IV zurückgeführt wird. Die Konzentration dieser in den Behälter IV zurückgeführten Extraktlösungsmenge ist höher als wenn die intensive Durcheinanderwirbelung in dem Rührer 5 nicht vorgenommen worden wäre. Mit den Lösungsmengen aus den restlichen Behältern VI bis XII wird genauso verfahren wie mit den Lösungsmengen aus den Behältern I bis IV. Da die einzelnen Lösungsmengen in den aufeinanderfolgenden Zyklen der weiteren Phase des Vorschaltprozesses nach ihrer Rückkehr aus dem Flachbettfilterextraktor um jeweils einen Behälter "vorgerückt" werden, wandert auch die Konzentrationserhöhung nach vorne, die durch das intensive Durcheinanderwirbeln in dem Rührer 5 erzeugt worden ist. Wenn sich die Konzentrationserhöhung bei der in dem Behälter I gespeicherten Extraktlösungsmenge ausgewirkt hat, nimmt das Konzentrationsgefälle der Extraktlösungsmengen in den Behältern I bis IV stetig ab, und zwischen der Lösungsmenge des Behälters IV und des Behälters V macht das Konzentrationsgefälle einen Sprung nach unten, wonach es bis zum Behälter XII wieder stetig abnimmt. In dem nachfolgenden Hauptprozess der Extraktion bleibt dieses Konzentrationsgefälle ständig erhalten. Nach dem einmal vorzunehmenden Vorschaltprozess folgt der kontinuierlich fortführbare Hauptprozess. Hierbei wird zu Beginn jeden Zykluses eine frische Charge in trockenem Zustand feinstgemahlenen Kaffees aus der Kugelmühle 1 in den Flachbettfilterextraktor 2 eingebracht. Danach werden die Extraktlösungsmengen aus der Behälterbatterie 4 nacheinander in den Flachbettfilterextraktor geführt, wobei angefangen wird mit der Extraktlösungsmenge höchster Konzentration, also mit der im Behälter I gespeicherten Extraktlösungsmenge, und geendet wird mit der Extraktlösungsmenge niedrigster Konzentration, also mit der im Behälter XII gespeicherten Extraktlösungsmenge, wobei nach jeder Zufuhr der jeweiligen Extraktlösungsmenge die Trennung aller Extraktlösungsmengen mit erhöhter Konzentration über das Filtermedium 3 erfolgt. Die abgetrennte Extraktlösungsmenge wird in den jeweils "nächsthöheren" Behälter geleitet. Die von der Mischung aus Kaffee und der Extraktlösungsmenge aus dem Behälter I abgetrennte Extraktlösungsmenge wird also in den Behälter 0 geführt, die von der die Extraktlösungsmenge aus dem Behälter II enthaltende Mischung abgetrennte Extraktlösungsmenge wird in den Behälter I geführt, usw. Hervorzuheben ist, daß die in den Behälter 0 geführte Extraktlösungsmenge lediglich ein Bruchteil von der Extraktlösungsmenge ist, die aus dem Behälter I in den Flachbettfilterextraktor geführt werden ist, während die nachfolgend abgetrennten Extraktlösungen mengenmäßig genauso groß sind wie die jeweils zu vor zugeführten Extraktlösungsmengen, so daß in dem Filterextraktor auch nach der Trennung eine Flüssigkeitsmischung verbleibt. Die Trennung in dem Extraktor wird dadurch wesentlich erleichtert. Erfindungsgemäß wird nach der Zufuhr der Extraktlösungsmenge aus dem Behälter V die Mischung aus dem Flachbettfilterextraktor abgesaugt und in den Intensivrührer 5 geleitet, in dem ein intensives Durcheinanderwirbeln der Mischung erfolgt. Danach wird diese Mischung wieder in den Filterextraktor zurückgeführt und eine Extraktlösungsmenge über das Filtermedium 3 von ihr abgetrennt. Angenommen der Extraktgehalt der Extraktlösung aus dem Behälter V beträgt 2,5 Gew.%, so hat die nach dem intensiven Durcheinanderwirbeln der Mischung abgetrennte Extraktlösungsmenge einen Extraktgehalt von 4,5 bis 6 Gew.%, das ist sehr viel mehr als wenn die Mischung nicht intensiv durcheinandergewirbelt und die Extraktlösungmenge sofort nach der Zufuhr der Extraktlösungsmenge aus dem Behälter V abgetrennt worden wäre. Die Konzentrationserhöhung hat sich bereits während des Vorschaltprozesses bis zur ersten Extraktionsstufe, also bis zu der in dem Behälter 0 geführten Extraktlösungsmenge, fortgesetzt, so daß diese Extraktlösungsmenge je nach Kaffeeprovinienz einen Extraktgehalt von 48 bis 52 Gew.% aufweist. Die nach der intensiven Durcheinanderwirbelung folgenden Extraktionsvorgänge laufen genauso ab, wie die Extraktionsvorgänge zu Beginn jeden Zykluses. Während eines Zykluses findet also nur einmal eine intensive Durcheinanderwirbelung der Mischung statt und zwar mit einer Extraktlösungsmenge, deren Extraktgehalt relativ gering ist. Durch diese Maßnahme wird das Aroma des Kaffees außerordentlich geschont. Das Verhältnis der zu Beginn jeden Zykluses in den Extraktor eingebrachten Kaffeemenge zu der jeweils zugeführten Extraktlösungsmenge beträgt beim vorliegenden Ausführungsbeispiel 1:5, anstelle eines Verhältnisses 1:5 könnten auch Verhältnisse 1:4, 1:6 bis 1:10 verwendet werden. Ein solches Verhältnis zwischen dem zu Beginn jeden Zykluses in den Extraktor eingeführten Kaffee und der jeweiligen Extraktlösungsmenge trägt wesentlich zu der Erzielung einer hohen Ausbeute bei, denn erst bei einem solchen Verhältnis ist es möglich, die Abtrennung über das Filtermedium ohne große Schwierigkeiten, d.h. sehr schnell, vorzunehmen.

Für eine schnelle Trennung der jeweiligen Extraktlösungsmenge ist ferner von Bedeutung, daß das Filtermedium, das aus einem monofilen Gewebe mit einer Maschenweite von 5 bis 20 μ besteht, vor der Trennung jeweils gründlich gereinigt wird. Die Reinigung des Filtergewebes wird dadurch vorgenommen, daß Druckgas von unten durch das Filtergewebe gepreßt wird. Die konstruktive Ausgestaltung des Filterextraktors zur Durchführung der Reinigung wird weiter unten beschrieben.

Die in jedem Zyklus im Behälter 0 gespeicherte Extraktlösung geht zur Trocknung, während im Behälter XII frisches Lösungsmittel nachgefüllt wird.

Erfindungsgemäß liegt die Verfahrenstemperatur bei Raumtemperatur, also etwa bei 25° C. Die geringe Verfahrenstemperatur trägt entscheidend zur Aromaerhaltung des Kaffees bei.

Als Alternative zu dem Intensivrührer 5 könnte auch die Kugelmühle 1 verwendet werden, in die dann die Mischung aus dem Extraktor 2 eingeführt und nochmals gemahlen wird. Der Mahlvorgang beträgt 6 bis 24 Stunden, vorzugsweise jedoch 12 Stunden, wobei eine Temperaturerhöhung nicht stattfindet. Es wird angenommen, daß durch das intensive Durcheinanderwirbeln entweder in dem Intensivrührer oder in der Kugelmühle eine weitere Zerkleinerung der Kaffeeteilchen erfolgt, so daß weitere lösliche Stoffe einschließlich Aromastoffe frei werden, die dann extrahiert werden.

Bei einer entsprechenden Ausgestaltung des Flachbettfilterextraktors könnte die intensive Durcheinanderwirbelung der Mischung auch im Extraktor selbst erfolgen. Hierzu könnte das bereits vorhandene Rührwerk 6 entsprechend ausgestaltet sein.

## Patentansprüche

1. Verfahren zur Extraktion der extrahierbaren Stoffe aus natürlichen Ausgangsstoffen, bei welchem in aufeinanderfolgenden Verfahrenszyklen jeweils eine frische Menge des zuvor gemahlenen Ausgangsstoffes auf ein Filtermedium aufgebracht wird und unterschiedlich konzentrierte Extraktlösungen in der Reihenfolge abnehmender Konzentration bei einer vorbestimmten Verfahrenstemperatur mit dem Ausgangsstoff jeweils vermischt und von ihm wieder abgetrennt werden, wobei die jeweilige Extraktlösung höchster Konzentration nach ihrer weiteren Anreicherung der Dehydratation zugeführt wird, dadurch gekennzeichnet, daß in jedem Verfahrenszyklus der Ausgangsstoff durch nochmaliges Mahlen oder intensives Rühren weiter zerkleinert wird und die Verfahrenstemperatur im Bereich zwischen 25°C und 50°C konstant gehalten wird.

2. Verfahren nach Anspruch 1, dadurch gekennzeichnet, daß der Schritt der weiteren Zerkleinerung erst dann durchgeführt wird, wenn im jeweiligen Zyklus dem Ausgangsstoff eine Extraktlösung zugemischt wird, die eine Konzentration von nur 1 bis 5 Gew.% hat.

3. Verfahren nach Anspruch 1 oder 2, dadurch gekennzeichnet, daß der Ausgangsstoff und die jeweils zugemischte Extraktlösung ein Mischungsverhältnis im Bereich von 1:4 bis 1:10 (Gew/Gew) haben.

4. Verfahren nach einem der vorhergehenden Ansprüche, dadurch gekennzeichnet, daß der gemahlene Ausgangsstoff eine Korngröße von 5 bis 50 μm aufweist und anfänglich trocken gemahlen wird.

5. Verfahren nach einem der vorhergehenden Ansprüche, dadurch gekennzeichnet, daß die bei jedem Zyklus am Anfang vom Ausgangsstoff abgetrennte Extraktlösungsmenge geringer ist als die vorher zugeführte Extraktlösungsmenge und daß die nachfolgenden Extraktlösungsmengen, die abgetrennt werden, genauso groß sind wie die jeweils zugeführten Extraktlösungsmengen.

## Claims

1. Method for extracting the extractable substances from natural starting materials in which in successive method cycles in each case a fresh amount of the previously ground starting material is applied to a filter medium and differently concentrated extract solutions are mixed in the order of decreasing concentration at a predetermined method temperature with the starting material and separated therefrom again, the respective extract solution of highest concentration being supplied after its further enrichment to the dehydration, characterized in that in each method cycle the starting material is further comminuted by again grinding or intensive agitation and the method temperature is held constant in the range between 25°C and 50°C.

2. Method according to claim 1, characterized in that the step of the further comminution is not carried out until in the respective cycle there is added to the starting material an extract solution which has a concentration of only 1 to 5 % by weight.

3. Method according to claim 1 or 2, characterized in that the starting material and the respective added extract solution have a mixing ratio in the range of 1:4 to 1:10 (by weight).

4. Method according to any one of the preceding claims, characterized in that the ground starting material has a grain size of 5 to 5g μm and is initially dry ground.

5. Method according to any one of the preceding claims, characterized in that the extract solution amount separated in each cycle at the start from the starting material is less than the previously supplied extract solution amount and that the following extract solution amounts which are separated are of exactly the same size as the respective supplied extract solution amounts.

**Revendications**

1. Procédé d'extraction des substances extractibles de substances naturelles de départ, dans lequel, en des cycles successifs de procédé, une quantité fraîche de la substance de départ moulue avant est appliquée chaque fois sur un milieu filtrant et que des solutions d'extrait concentrées différemment sont chaque fois mélangées, par ordre de concentration décroissante et à une température de procédé prédéterminée, à la substance de départ et qu'elles en sont de nouveau séparées, la solution correspondante d'extrait de concentration la plus haute étant amenée, après son enrichissement supplémentaire, à la déshydratation, caractérisé en ce que, dans chaque cycle de procédé, la substance de départ est encore une fois broyée par une nouvelle mouture ou par une agitation intensive et que la température de procédé est maintenue constante dans une plage comprise entre 25 et 50° C.

2. Procédé suivant la revendication 1, caractérisé en ce que l'étape du broyage supplémentaire s'exécute seulement quand, dans le cycle correspondant, une solution d'extrait qui a une concentration de seulement 1 à 5 % en poids est ajoutée à la substance de départ.

3. Procédé suivant la revendication 1 ou 2, caractérisé en ce que la substance de départ et la solution d'extrait chaque fois ajoutée ont un rapport de mélange compris entre 1/4 et 1/10 en poids.

4. Procédé suivant une des revendications précédentes, caractérisé en ce que la substance moulue de départ présente a un calibre compris entre 5 et 50 microns et qu'elle est d'abord moulue à sec.

5. Procédé suivant une des revendications précédentes, caractérisé en ce que la quantité de solution d'extrait séparée de la substance de départ au commencement de chaque cycle est plus faible que la quantité de solution d'extrait amenée avant et que les quantités suivantes de solution d'extrait qui sont séparées sont exactement aussi grandes que les quantités de solution d'extrait chaque fois amenées.

Fig.1

0 084 554

Trocknung